# EUROPÄISCHE PATENTSCHRIFT

(11) **EP 3 538 835 B1**
(45) Veröffentlichungstag und Bekanntmachung des Hinweises auf die Patenterteilung: **04.09.2024**
(21) Anmeldenummer: 17800413.1
(22) Anmeldetag: 27.10.2017
(51) Int. Cl.: F41G 3/14, F41H 13/00, F41H 11/02, F41G 7/22, G01S 7/495

(54) **VERFAHREN UND ABWEHRSYSTEM ZUR BEKÄMPFUNG VON BEDROHUNGEN**
METHOD AND DEFENCE SYSTEM FOR COMBATING THREATS
PROCÉDÉ ET SYSTÈME DE DÉFENSE CONTRE DES MENACES

(30) Priorität: 11.11.2016 DE 102016121698
(43) Veröffentlichungstag der Anmeldung: 18.09.2019
(73) Patentinhaber: Rheinmetall Waffe Munition GmbH, 29345 Südheide (DE)
(72) Erfinder: JUNG, Markus, 29358 Eicklingen (DE); GRAF, Alexander, 29525 Uelzen (DE)
(74) Vertreter: DREISS Patentanwälte PartG mbB
(86) Internationale Anmeldenummer: PCT/EP2017/077695
(87) Internationale Veröffentlichungsnummer: WO 2018/086919

(56) Entgegenhaltungen:
- EP-A1- 2 051 039
- DE-A1- 3 202 432
- US-A- 5 050 476
- US-A1- 2009 110 019
- US-A1- 2012 154 598
- US-A1- 2012 210 852

## Beschreibung

Die Erfindung beschäftigt sich mit einem Verfahren zur Abwehr von Zielen bzw. Bedrohungen, insbesondere zur Abwehr sich bewegender oder stationärer Objekte. Darunter fallen Flugkörper, wie Lenkflugkörper, Raketen, Granaten, Hubschrauber, Flugzeuge sowie Fahrzeuge. Insbesondere richtet sich das Verfahren auf die Erkennung und Vernichtung von Bedrohungen. Die Erfindung beschäftigt sich auch mit einem Abwehrsystem, das zumindest ein Lasersystem sowie auf IR-Sensor basierte Abwehrmittel, wie Flugkörper, Lenkmunition, UAV etc. umfasst.

Zum Schutz vor Bedrohungen können zu schützende Objekte durch pyrotechnische Leuchtkörper getarnt werden, während das zu schützende Objekt beispielsweise aus der Gefahrenzone herausgebracht werden kann. Bewährt haben sich hier Vorrichtungen und Verfahren wie sie unter anderem aus der DE 10 2005 020 159 B4 oder DE 10 2005 035 251 A1 bekannt sind. Die DE 10 2011 009 154 A1 verbringt den Tarnnebel direkt vor den Angreifer, möglichst dicht vor den Suchkopf.

Aus der DE 10 2011 120 929 A1 ist ein aktives Täuschen einer intelligenten, Radar gelenkten Bedrohung bekannt. Das aktive Täuschen wird durch ein Antennenarray geschaffen, welches auf oder unter der Oberfläche eines Munitionskörpers aufgebracht ist. Mittels einer geeigneten Signalverarbeitung und Geometrie werden sowohl die Richtwirkung als auch das auszusendende Radarsignal beeinflusst. So können auch signifikante Signaturen verschiedener Ziele dem reflektierenden Signal aufgeprägt werden, um die Bedrohung vom Ziel abzulenken.

Eine andere Gegenmaßnahme sieht das Verwenden von Störsendern vor. Die DE 10 2013 014 192 A1 benutzt eine Lasereinheit mit einem Modulationscode, um modulierte Messstrahlung zum Flugobjekt zu senden. Dadurch wird die Zielerfassung des Suchers gestört. Des Weiteren wird die vom Flugobjekt reflektierte Messstrahlung erfasst, mit dem Modulationscode korreliert und aus der Korrelation die Entfernung zum Flugobjekt ermittelt. - Zur Abschirmung vor Störstrahlung ist in der DE 10 2011 104 021 A1 angedacht, eine Abschirmeinheit mit einem teilweise um das optische Gelenk geführten Abschirmelement einzubinden.

Ein Verfahren zum Abwehren eines Flugkörpers mittels Abwehrstrahlung, bei dem der Flugkörper als solches erkannt und klassifiziert wird, wird in der DE 10 2011 009 459 A1 behandelt. Die Abwehrstrategie wird in Abhängigkeit eines Bestrahlungswinkels zwischen der Bestrahlungsrichtung und der Flugrichtung des Flugkörpers erstellt. Dabei wird von der Überlegung ausgegangen, möglichst viel Strahlungsenergie in ausgewählten, funktionssensiblen Flugkörperelementen des Flugkörpers zur sicheren Beschädigung zu deponieren. Daher ist es wichtig, das ausgewählte Flugkörperelement in einem richtigen Bestrahlungswinkel zu treffen. Der damit verbundene technische Aufwand ist hoch.

Zur Selbstverteidigung eines Flugzeuges gegen einen Flugkörper mit IR-Suchkopf wird auch die Verwendung einer Laserquelle für ein DIRCM - Laserwaffensystem vorgeschlagen, wie es die DE 10 2006 047 845 A1 aufzeigt. Auch die DE 197 24 080 A1 sieht das Zerstören eines Flugkörpers mit einem Infrarot-Suchkopf durch einen gerichteten Laserstrahl hochintensiver Strahlung vor. Hierzu sind Laser bzw. Laserwaffen mit hoher Leistung bzw. Strahlung notwendig.

DE 32 02 432 A1 offenbart einen Hochenergielaser-Feintracker, dessen HEL-Laser ein Richtlaser und eine HEL-Strahlteiler zugeordnet sind.

Die US 2009/110019 A1 offenbart ein Zielmarkierungssystem mit einem Laser, um einen thermischen Infrarotstrahl zu erzeugen und diesen auf ein Ziel zu senden, um ein entsprechendes Bild einer Wärmebildkamera zu erstellen. Das Markieren umfasst das Zielen mit der eigenen Waffe, das Zeigen für anderer Waffensysteme, das Lokalisieren für konventionelle und koordinatengeführte Munition und das Bestimmen für lasergeführte Munition.

Die US 2012/210852 A1 betrifft ein Verfahren zum Bereitstellen einer Verteidigung u.a. gegen einen ballistischen Flugkörper. Der ballistische Flugkörper wird erfasst und verfolgt, eine abfangende Rakete sicher ausgebracht. Ein die abfangende Rakete ausbringendes Flugzeug lenkt dann die abfangende Rakete in eine Position, in der es den ballistischen Flugkörper erkennt und gegen diesen aufprallen kann. Dazu wird die Nutzlast des ballistischen Flugzeugs mit einem Laser gekennzeichnet. Die abfangende Rakete erkennt die Laserbeleuchtung mit einem semiaktiven Laser-Suchkopf. Für diese Zuordnung muss der Flugkörper bzw. das Ziel auf eine bestimmte Temperatur erhitzt werden.

Die Erfindung stellt sich die Aufgabe, ein Verfahren aufzuzeigen, das ein einfaches Erkennen einer Bedrohung effizient ermöglicht und ein sicheres Vernichten dieser gewährleistet.

Gelöst wird die Aufgabe durch ein Verfahren mit den Merkmalen des Patentanspruchs 1 und ein Abwehrsystem mit den Merkmalen des Patentanspruchs 7. Vorteilhafte Ausgestaltungen sind in den Unteransprüchen enthalten.

Der Erfindung liegt die Idee zugrunde, ein Ziel oder eine Bedrohung für eine Abwehrmaßnahme besser sichtbar zu machen.

Die US 5,050,476 A beschäftigt sich mit einem Raketensystem, das einen Laser zum thermischen Markieren eines Ziels umfasst, mit dem ein heißer Punkt auf dem Ziel erzeugt wird. Eine wärmesuchende Rakete nimmt dann den erhitzten Punkt auf dem Ziel auf. Die Laserleistung für die verschiedenen Sucher in der Rakete ist dabei abhängig von der Zeit, zu der der Laser eingeschaltet wird. Dabei handelt es sich um eine Angriffsmaßnahme. Die Nutzung zur Abwehr der Bedrohung bzw. des Ziels wird hier nicht angesprochen.

Das Ziel bzw. die Bedrohung soll gemäß der Erfindung für die Abwehrmaßnahme intensiver abgebildet werden. Dabei ist es unwichtig, ob die Bedrohung bzw. das Ziel selbst mit einem IR-Suchkopf ausgebildet ist oder nicht.

Für das effektivere Abbilden ist vorgesehen, dass das Ziel / die Bedrohung selbst eine stärkere IR Signatur abgibt und so sich vom Hintergrund ausreichend für die auszusendende Abwehrmaßnahme mit einem IR Sensor abheben kann. Dadurch kann das Ziel / die Bedrohung von der Abwehrmaßnahme besser detektiert, d.h., durch diese Abwehrmaßnahme erfolgreich bekämpft werden. Ausgenutzt wird die Eigenschaft, dass Metalle, Stahl, Kunststoff und andere Materialien (z.B. Beton) eine Laserbestrahlung absorbieren und sich dadurch erwärmen. Zur Umsetzung dieser Idee ist vorgesehen, dass eine Laserstrahlung das Ziel / die Bedrohung an ihrer Oberfläche erwärmt. Die Erwärmung bewirkt einen größeren erwärmten (roten) Fleck, der auf der Oberfläche des Ziels / der Bedrohung erzeugt wird. Diese intensivierte elektrooptische Abbildung des Ziels / der Bedrohung kann von einem Flugkörper mit einem IR-Suchkopf als Abwehrmaßnahme besser aufgenommen werden.

Die stärkere Strahlung wird somit durch Erhitzen einer Oberfläche des Ziels / der Bedrohung hervorgerufen, was durch ein Laserwaffensystem realisiert wird, das die dazu notwendige Laserstrahlung liefert. Die Abwehrmaßnahme kann dann diese Erhitzung besser detektieren, da sich diese als erwärmte Fläche besser vom Hintergrund abhebt.

Das Aufschalten des Laserwaffensystems auf die Bedrohung bzw. das Aussenden eines zeitlich begrenzten Laserstrahls auf die Bedrohung erfolgt, nachdem eine mögliche Bedrohung durch ein Detektionsgerät erkannt worden ist.

Ist das Ziel / die Bedrohung z.B. ein Flugkörper ohne Suchkopf, wird bevorzugt die Nase (Ogive, Haube) des Flugkörpers erwärmt. Handelt es sich bei der Bedrohung um einen Flugkörper mit Suchkopf, wird bevorzugt der Suchkopf selbst erwärmt. Des Weiteren können auch der Rumpf, die Flügel wie auch das Leitwerk erwärmt werden, einzeln oder in Kombination.

Weist der Flugkörper (mit oder ohne Suchkopf) eine Kunststoffhaube auf, kann es ausreichend sein, diese Kunststoffhaube zu zerstören. Dadurch kann die Flugeigenschaft des Flugköpers eingeschränkt werden, sodass dieser das zu schützende Objekt verfehlt. Der Flugkörper wird somit unbrauchbar gemacht.

Erfindungsgemäß werden ein Laserwaffensystem und eine Bedrohungsabwehr funktional miteinander kombiniert. Das Laserwaffensystem hat primär dabei nicht die Aufgabe, die Bedrohung selbst zu zerstören. Die auszustrahlende Laserleistung kann dadurch geringer sein als die einer Laserwaffe. Zudem wird durch dieses Laserwaffensystem die Zielgenauigkeit der Bedrohungsabwehr erhöht. So reicht das Aussenden bzw. Ausbringen nur einer Abwehrmaßnahme aus, um die Bedrohung abzuwehren. Zudem wird der Einsatz von Laserwaffensystemen erweitert. Die Bedrohungsabwehr wird durch das Laserwaffensystem unterstützt. Laserwaffensysteme sind in der Praxis bereits bekannt. So beschreibt die DE 10 2012 150 074 B3 ein Laserwaffensystem, mit einer Strahlrichteinheit aufweisend zumindest eine Lasererzeugungseinheit, zumindest ein Ausgangsstufenelement und ein Strahloptikelement. Ein weiteres Laserwaffensystem offenbart auch die WO 2012/062399 A1.

Zur Durchführung des Verfahrens werden zumindest ein Detektionsgerät zur Detektion einer Bedrohung, ein Laserwaffensystem, bevorzugt ein Hochleistungslaser-Waffensystem, sowie eine Gegenmaßnahme (Abwehrmittel), hier eine Rakete (Missile), ein Flugkörper mit IR-Suchkopf oder eine IR Drohne etc., benötigt. Auch der Einsatz eines Beleuchtungslasers innerhalb des Abwehrsystems ist vorgesehen.

Von Vorteil ist auch ein Ziel-Such-System als Verfolgungssystem. Nachdem die Bedrohung an wenigstens einem ihrer empfindlichen Strukturteil erwärmt wurde, kann die Gegenmaßnahme bzw. Abwehrmaßnahme ausgelöst und gegen die Bedrohung verbracht werden.

Bei mehreren Bedrohungen kann auch wenigstens ein weiteres Laserwaffensystem eingesetzt werden. Mehr als ein Laserwaffensystem haben den Vorteil, dass diese auf nur eine Bedrohung einwirken können, was das Zeitfenster für die Bedrohungsvernichtung vergrößert, da die Erwärmung der empfindlichen Strukturteile schneller erfolgt. Die Laserstrahlen werden dazu bevorzugt am Ziel überlagert.

Vorgeschlagen wird, eine Bedrohung bzw. ein Ziel für eine Abwehrmaßnahme besser sichtbar zu machen. Die Bedrohung bzw. das Ziel soll in diesem Zusammenhang für die Abwehrmaßnahme intensiver abgebildet werden. Für das effektivere Abbilden ist vorgesehen, dass die Bedrohung bzw. das Ziel eine stärkere IR Signatur abgibt und so sich vom Hintergrund ausreichend für die Abwehrmaßnahme abheben kann. Die stärkere IR-Signatur wird durch Erhitzen einer Oberfläche der Bedrohung bzw. des Ziels selbst hervorgerufen, was durch ein Laserwaffensystem realisiert wird. Die Abwehrmaßnahme kann diese Erhitzung besser detektieren und weist dazu einen IR-Suchkopf auf.

Prinzipiell kann das Verfahren auf alle möglichen Ziele und Bedrohungen Anwendung finden, die ein Material umfassen, dass eine Laserbestrahlung absorbieren und sich dadurch erwärmen kann. Das Verfahren ist für alle Flugkörper anwendbar und nicht nur auf bedrohliche IR- oder RF- Flugkörper beschränkt. Das Verfahren kann zudem auch für andere Ziele / Bedrohungen genutzt werden. Darunter können sich neben den bewegenden auch stationäre Ziele / Bedrohungen fallen.

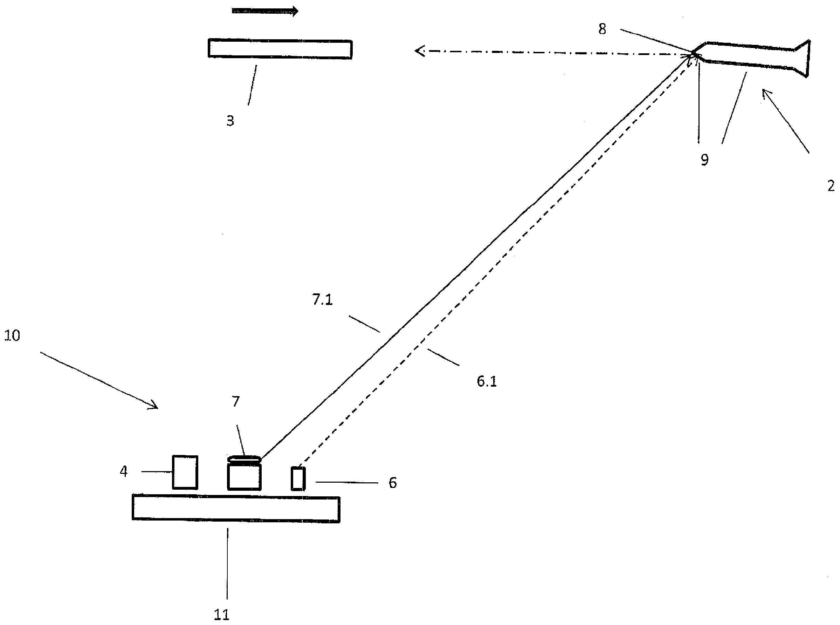

Anhand eines Ausführungsbeispiels mit Zeichnung soll die Erfindung näher erläutert werden. Es zeigt die einzige Figur in Blockbilddarstellung eines Abwehrsystems 10 zur Bedrohungsabwehr. Die Bedrohung 2 ist im vorliegenden Ausführungsbeispiel ein ankommender Flugkörper. Zur Bedrohungsabwehr ist im vorliegenden Ausführungsbeispiel eine aus einer nicht näher dargestellten Waffe (Abschussvorrichtung) verbringbare Rakete (Missile) 3 mit einem IR-Suchkopf vorgesehen.

Das Abwehrsystem 10 umfasst wenigstens ein Detektionsgerät 4, das ein Radar oder ein elektro-optisches System sein kann. Ein Laser 6 ist als Beleuchtungslaser in das Abwehrsystems 10 integriert. Mit 7 ist ein Laserwaffensystem gekennzeichnet, das die Bedrohung 2 erfindungsgemäß besser charakterisieren (kennzeichnen) soll. Das Laserwaffensystem 7 ist dabei ein Hochleistungslaser, Eine Feuerleitung des Abwehrsystems 10 ist nicht näher dargestellt, da bekannt. Über diese Feuerleitung werden eingehende Signale, Daten etc. z.B. des Detektionsgerätes 4 etc. verarbeitet und als Signale oder Daten an die im Abwehrsystem 10 eingebundenen Aktuatoren, z.B. eine nicht näher dargestellte Waffe, den Laser 6 oder das Laserwaffensystem 7 etc., ausgegeben.

Das Laserwaffensystem 7 besteht zumindest aus einer Lasereinheit, einem Laser (Hochleistungslaser), wie Single-Resonator-Oszillator, oder Master-Oszillator-Power-Amplifier (MOPA), sowie zugehörigen Optiken (nicht näher dargestellt).

Mittels des Detektionsgerätes 4 wird ein zu überwachender Raum um ein zu sicherndes Objekt 11 (stationär, beweglich oder sich bewegend) regelmäßig abgesucht und auf ankommende Flugkörper 2 überwacht.

Mit Erkennen der Bedrohung kann das Aussenden der Gegenmaßnahme durch die Feuerleitung eingeleitet und die Rakete 3 gegen den Flugkörper 2 in bekannter Art und Weise geschickt werden. Die dazu notwendige Abschussvorrichtung (nicht näher dargestellt) kann sich auch entfernt des Objektes 11 befinden, sollte jedoch mit der Feuerleitung des Abwehrsystems 10 funktional verbunden sein.

Zum Zeitpunkt der Detektion der Bedrohung 2 kann sich auch ein Ziel-Verfolgungssystem (nicht näher dargestellt) auf diese aufschalten.

Um zu erreichen, dass ein Einzelschuss den Flugkörper 2 vernichtet, ist vorgesehen, dass der Rakete 3 ein deutlich erkennbares Ziel (Flugkörper 2) gegenüber steht. Dieser Flugkörper 2 sollte sich dazu vom Hintergrund besser abheben. Dieses bessere Abheben ist durch eine zumindest punktuelle Erwärmung an der Bedrohung realisierbar. In der Praxis hat sich eine Temperatur- Differenz von ca. 2°C als ausreichend gezeigt. Bei einer Umgebung von 15°C wäre eine Erhitzung auf 17°C ausreichend und zu erzielen.

Sobald das Detektionsgerät 4 den ankommenden Flugkörper 2 detektiert hat, ist vorgesehen, dass sich der Beleuchtungslaser 6 auf den Flugkörper 2 aufschaltet, auf diesen seine Laserstrahlung 6.1 fixiert. Dieser Fixpunkt 8 auf dem Flugkörper 2 befindet sich bevorzugt im sichtbaren Bereich des Flugköpers 2 (im Allgemeinen die Flugkörpernase). Der Fixpunkt 8 kann dabei auf empfindliche Strukturteile des Flugkörpers 2 bevorzugt auf der Nase (Ogive, Haube), Leitwerk etc. des Flugkörpers 2 liegen. Der Fixpunkt 8 wird von dem Laserwaffensystem 7 zur Ausrichtung seines Laserstrahls 7.1 auf den Flugkörper 2 genutzt. Mit Hilfe des Laserstrahls 7.1 wird der Flugkörper 2 an seiner Oberfläche 9, bevorzugt im Bereich der Nase (Ogive, Haube), erhitzt bzw. erwärmt. Dadurch wird der Flugkörper 2 an dieser Stelle wärmer und bildet für den IR-Suchkopf der Rakete 3 einen deutlich erkennbaren Fleck auf dem Flugkörper 2 ab. Die Rakete 3 kann zielsicher den Flugkörper 2 vernichten.

Das Verfahren kann auch auf stationäre Bedrohungen / Ziele Anwendung finden.

## Patentansprüche

1. Verfahren zur Abwehr einer Bedrohung (2) mit folgenden Schritten:
- Detektieren der Bedrohung (2) durch zumindest ein Detektionsgerät (4),
- Aufschalten wenigstens eines Laserwaffensystems (7) auf die Bedrohung (2),
- Aussenden eines Laserstrahls (7.1) des wenigstens einen Laserwaffensystems (7) auf die Bedrohung (2),
- Auftreffen des Laserstrahls (7.1) des wenigstens einen Laserwaffensystems (7) auf einer Oberfläche (9) der Bedrohung (2), wobei
- der Laserstrahl (7.1) des wenigstens einen Laserwaffensystems (7) die Oberfläche (9) der Bedrohung (2) punktuell erwärmt, sodass die Bedrohung (2) derart intensiver abgebildet wird, dass die Bedrohung (2) eine stärkere IR-Signatur abgibt und sich vor einem Hintergrund ausreichend für eine Abwehrmaßnahme (3) abhebt,
- die Erwärmung der Oberfläche (9) der Bedrohung (2) durch einen IR-Suchkopf einer Abwehrmaßnahme (3) detektierbar ist,
**gekennzeichnet durch**:
- Aufschalten eines Beleuchtungslasers (6) auf die Bedrohung (2),
- Fixieren einer Laserstrahlung (6.1) des Beleuchtungslasers (6) auf die Bedrohung (2), sodass sich im sichtbaren Bereich des Flugkörpers (2) ein Fixpunkt (8) befindet,
- Nutzen des Fixpunkts 8 zur Ausrichtung des Laserstrahls 7.1 des Laserwaffensystems 7 auf den Flugkörper 2, und
- Ausbringen der den IR-Suchkopf aufweisenden Abwehrmaßnahme (3) von wenigstens einer Abschussvorrichtung nachdem die Bedrohung (2) erwärmt wurde.

2. Verfahren nach Anspruch 1, **dadurch gekennzeichnet, dass** die Erwärmung auf der Oberfläche derart erfolgt, dass die Erwärmung im vorderen Bereich der Bedrohung (2) erfolgt.

3. Verfahren nach Anspruch 2, **dadurch gekennzeichnet, dass** die Erwärmung auf der Oberfläche der Bedrohung (2) derart erfolgt, dass die Erwärmung im Bereich einer Nase, Ogive oder Haube der Bedrohung (2) erfolgt.

4. Verfahren nach einem der Ansprüche 1 bis 3, **dadurch gekennzeichnet, dass** die Erwärmung auf der Oberfläche der Bedrohung (2) derart erfolgt, dass des Weiteren Rumpf, Flügel wie auch Leitwerk der Bedrohung (2) erwärmbar sind, einzeln oder in Kombination.

5. Verfahren nach einem der Ansprüche 1 bis 4, **dadurch gekennzeichnet, dass** das Aussenden des Laserstrahls (7.1) auf die Bedrohung (2) zeitlich begrenzt erfolgt.

6. Verfahren nach einem der Ansprüche 1 bis 5, **dadurch gekennzeichnet, dass** durch die punktuelle Erwärmung an der Bedrohung (2) eine Temperatur-Differenz vom Hintergrund realisierbar ist, wobei eine Temperatur-Differenz von 2° C ausreichend ist.

7. Abwehrsystem (10) zur Durchführung des Verfahrens nach einem der Ansprüche 1 bis 6, mit wenigstens einem Detektionsgerät (4) zum Detektieren der Bedrohung (2), wenigstens einem Laserwaffensystem (7) zum Aussenden eines Laserstrahls (7.1) zum Erwärmen einer Oberfläche (9) der Bedrohung (2) sowie wenigstens einer Abschussvorrichtung zum Ausbringen einer Abwehrmaßnahme (3) gegen die Bedrohung (2), wobei ein Laser (6) als Beleuchtungslaser eingebunden ist, und wobei die Abwehrmaßnahme (3) eine Rakete mit einem IR-Suchkopf oder eine IR-Drohne ist.

8. Abwehrsystem (10) nach Anspruch 7, **dadurch gekennzeichnet, dass** das Laserwaffensystem (7) ein Hochleistungslaser-Wasffensystem ist.

9. Abwehrsystem (10) nach einem der Ansprüche 7 bis 8, **dadurch gekennzeichnet, dass** das Abwehrsystem (10) eine Feuerleitung aufweist.

10. Abwehrsystem (10) nach einem der Ansprüche 7 bis 9, **dadurch gekennzeichnet, dass** das Detektionsgerät (4) ein Radar oder ein elektro-optisches System ist.

11. Objekt (11) mit einem Abwehrsystem (10) nach einem der Ansprüche 7 bis 10.

## Claims

1. Method for defense against a threat (2), comprising the following steps:
- detecting the threat (2) by means of at least one detection device (4),
- locking at least one laser weapon system (7) onto the threat (2),
- emitting a laser beam (7.1) of the at least one laser weapon system (7) onto the threat (2),
- striking the laser beam (7.1) of the at least one laser weapon system (7) on a surface (9) of the threat (2),
- the laser beam (7.1) of the at least one laser weapon system (7) heating the surface (9) of the threat (2) at specific points so that the threat (2) is imaged more intensively such that the threat (2) emits a stronger infrared signature and stands out against a background sufficiently for a defense measure (3),
- it being possible for the heating of the surface (9) of the threat (2) to be detected by an infrared seeker head of a defense measure (3),
**characterized by**:
- locking an illumination laser (6) onto the threat (2),
- fixing a laser beam (6.1) of the illumination laser (6) onto the threat (2) so that a fixed point (8) is located in the visible region of the missile (2),
- using the fixed point (8) to align the laser beam (7.1) of the laser weapon system (7) onto the missile (2), and
- deploying the defense measure (3) comprising the IR seeker head from at least one launch device after the threat (2) has been heated.

2. Method according to claim 1, **characterized in that** the heating on the surface is carried out such that the heating takes place in the front region of the threat (2) .

3. Method according to claim 2, **characterized in that** the heating on the surface of the threat (2) takes place such that the heating takes place in the region of a nose, ogive or hood of the threat (2).

4. Method according to any of claims 1 to 3, **characterized in that** the heating on the surface of the threat (2) takes place such that the fuselage, wings and tail unit of the threat (2) can also be heated, individually or in combination.

5. Method according to any of claims 1 to 4, **characterized in that** the emission of the laser beam (7.1) onto the threat (2) is limited in time.

6. Method according to any of claims 1 to 5, **characterized in that** a temperature difference with respect to the background can be achieved by heating the threat (2) at specific points, a temperature difference of 2°C being sufficient.

7. Defense system (10) for carrying out the method according to any of claims 1 to 6, comprising at least one detection device (4) for detecting the threat (2), at least one laser weapon system (7) for emitting a laser beam (7.1) for heating a surface (9) of the threat (2) and at least one launch device for deploying a defense measure (3) against the threat (2), wherein a laser (6) is integrated as an illumination laser, and wherein the defense measure (3) is a rocket having an infrared seeker head or an infrared drone.

8. Defense system (10) according to claim 7, **characterized in that** the laser weapon system (7) is a high-power laser weapon system.

9. Defense system (10) according to any of claims 7 to 8, **characterized in that** the defense system (10) has fire control.

10. Defense system (10) according to any of claims 7 to 9, **characterized in that** the detection device (4) is a radar or an electro-optical system.

11. Object (11) having a defense system (10) according to any of claims 7 to 10.

## Revendications

1. Procédé permettant la défense contre une menace (2), comportant les étapes suivantes:
- détection de la menace (2) par au moins un appareil de détection (4),
- activation d'au moins un système d'armes à laser (7) sur la menace (2),
- émission d'un faisceau laser (7.1) de l'au moins un système d'armes à laser (7) sur la menace (2),
- impact du faisceau laser (7.1) de l'au moins un système d'armes à laser (7) sur une surface (9) de la menace (2), dans lequel
- le faisceau laser (7.1) de l'au moins un système d'armes à laser (7) réchauffe ponctuellement la surface (9) de la menace (2), de sorte que la menace (2) est représentée de manière plus intense de telle sorte que la menace (2) émet une signature infrarouge plus forte et se démarque sur un arrière-plan de manière suffisante pour une mesure de défense (3),
- réchauffement de la surface (9) de la menace (2) pouvant être détecté par une tête chercheuse à rayons infrarouges d'une mesure de défense (3),
**caractérisé par** :
- l'activation d'un laser d'éclairage (6) sur la menace (2),
- la fixation d'un rayonnement laser (6.1) du laser d'éclairage (6) sur la menace (2), de sorte qu'un point fixe (8) se trouve dans la zone visible du missile (2),
- l'utilisation du point fixe (8) pour l'orientation du faisceau laser (7.1) du système d'armes à laser (7) sur le missile (2), et
- le déploiement de la mesure de défense (3) présentant la tête chercheuse à rayons infrarouges à partir d'au moins un dispositif de lancement après que la menace (2) a été réchauffée.

2. Procédé selon la revendication 1, **caractérisé en ce que** le réchauffement s'effectue sur la surface de telle sorte que le réchauffement s'effectue dans la zone avant de la menace (2).

3. Procédé selon la revendication 2, **caractérisé en ce que** le réchauffement est effectué sur la surface de la menace (2) de telle sorte que le réchauffement est effectué dans la zone d'une pointe avant, d'une ogive ou d'un capot de la menace (2).

4. Procédé selon l'une des revendications 1 à 3, **caractérisé en ce que** le réchauffement est effectué sur la surface de la menace (2) de telle sorte que le fuselage, les ailes ainsi que l'empennage de la menace (2) peuvent en outre être réchauffés, individuellement ou en combinaison.

5. Procédé selon l'une des revendications 1 à 4, **caractérisé en ce que** l'émission du faisceau laser (7.1) sur la menace (2) est limitée dans le temps.

6. Procédé selon l'une des revendications 1 à 5, **caractérisé en ce qu'**une différence de température par rapport à l'arrière-plan peut être réalisée par le réchauffement ponctuel sur la menace (2), dans lequel une différence de température de 2° C est suffisante.

7. Système de défense (10) permettant de réaliser le procédé selon l'une des revendications 1 à 6, comportant au moins un appareil de détection (4) permettant de détecter la menace (2), au moins un système d'armes à laser (7) permettant d'émettre un faisceau laser (7.1) pour le réchauffement d'une surface (9) de la menace (2) ainsi qu'au moins un dispositif de lancement permettant de déployer une mesure de défense (3) contre la menace (2), dans lequel un laser (6) est intégré comme laser d'éclairage, et dans lequel la mesure de défense (3) est une roquette comportant une tête chercheuse à rayons infrarouges ou un drone à rayons infrarouges.

8. Système de défense (10) selon la revendication 7, **caractérisé en ce que** le système d'armes à laser (7) est un système d'armes à laser à haute puissance.

9. Système de défense (10) selon l'une des revendications 7 à 8, **caractérisé en ce que** le système de défense (10) présente une conduite de tir.

10. Système de défense (10) selon l'une des revendications 7 à 9, **caractérisé en ce que** l'appareil de détection (4) est un radar ou un système électro-optique.

11. Objet (11) comportant un système de défense (10) selon l'une des revendications 7 à 10.
